# EUROPÄISCHE PATENTSCHRIFT

(11) **EP 1 147 838 B1**
(45) Veröffentlichungstag und Bekanntmachung des Hinweises auf die Patenterteilung: **21.06.2006**
(21) Anmeldenummer: 01109002.4
(22) Anmeldetag: 11.04.2001
(51) Int. Cl.: B23B 3/16, B23B 31/36

(54) **Werkzeugmaschine und Werkstückspannfutter**
Machine tool and chuck
Machine-outil et mandrin

(30) Priorität: 20.04.2000 DE 10019775
(43) Veröffentlichungstag der Anmeldung: 24.10.2001
(73) Patentinhaber: Index-Werke GmbH & Co. KG Hahn & Tessky, 73730 Esslingen (DE)
(72) Erfinder: Ragab, Mahmoud, 73269 Hochdorf (DE)
(74) Vertreter: Hoeger, Stellrecht & Partner Patentanwälte

(56) Entgegenhaltungen:
- CH-A- 659 021
- US-A- 3 685 845
- US-A- 4 321 845
- US-A- 5 471 900

## Beschreibung

Die Erfindung betrifft eine Werkzeugmaschine zum Drehbearbeiten von Werkstücken mit exzentrischen Abschnitten, umfassend einen in Richtung mindestens einer Achse bewegbaren Werkzeugträger, eine um eine Spindelachse drehbar antreibbare Werkstückspindel, welche ein Werkstückspannfutter umfaßt, in dem das Werkstück mit variabel einstellbarer Exzentrizität spannbar ist, wobei das Werkstückspannfutter ein Futtergehäuse, eine Spannzangenbetätigung und einen in dem Futtergehäuse angeordneten Spannzangenträger mit einer an diesem gehaltenen Spannzange aufweist, welch letztere durch Bewegen des Spannzangenträgers relativ zum Futtergehäuse in zur Spindelachse konzentrische oder exzentrische Positionen bringbar ist.

Ein für eine derartige Werkzeugmaschine vorgesehene Werkstückspindel ist aus der US 3,685,845 bekannt, bei dieser ist jedoch eine stufenlose Einstellung des Spannzangenträgers relativ zum Futtergehäuse nur manuell, insbesondere unter Einsatz von Meßwerkzeugen zur exakten Festlegung der Exzentrizität der jeweiligen Einstellposition einstellbar.

Der Erfindung liegt daher die Aufgabe zugrunde, eine Werkzeugmaschine der gattungsgemäßen Art derart zu verbessern, daß die Einstellung des Spannzangenträgers relativ zum Futtergehäuse einfacher erfolgen kann.

Diese Aufgabe wird bei einer Werkzeugmaschine der eingangs beschriebenen Art erfindungsgemäß dadurch gelöst, daß die Werkzeugmaschine mindestens eine durch eine Maschinensteuerung gesteuerte Achse aufweist, daß an der Werkzeugmaschine ein Stellelement vorgesehen ist, welches zum Einstellen der jeweiligen Einstellposition der Spannzange auf das Werkstückspannfutter zu bewegbar ist und mit einer mit dem Spannzangenträger verbundenen Aufnahme in Wirkverbindung bringbar ist und daß in dieser Wirkverbindung zwischen dem Stellelement und dem Spannzangenträger die Relativbewegung zwischen dem Spannzangenträger und dem Futtergehäuse zur Veränderung der Einstellposition durch die mindestens eine gesteuerte Achse mittels der Maschinensteuerung steuerbar ist.

Der Vorteil der erfindungsgemäßen Lösung ist darin zu sehen, daß mit dieser die Möglichkeit besteht, die in der Regel ohnehin vorhandene Maschinensteuerung dazu einzusetzen, um die jeweilige Einstellposition der Spannzange relativ zum Futtergehäuse vorzunehmen, so daß einerseits die aufwendige manuelle Einstellung entfallen kann und andererseits sogar noch der Vorteil besteht, daß während eines Bearbeitungszyklus durch entsprechende Vorgaben der Maschinensteuerung eine Variation der Einstellposition möglich ist.

Besonders günstig läßt sich dies dann erreichen, wenn das Stellelement durch die Maschinensteuerung relativ zur Aufnahme in einer Eingriffsrichtung bewegbar ist, welche quer zur Bewegungsrichtung des Spannzangenträgers relativ zum Futtergehäuse verläuft.

Durch eine derart verlaufende Eingriffsrichtung lassen sich das Stellelement und die Aufnahme als zusammenwirkende Formschlußelemente ausbilden, die lediglich durch die Bewegung in Eingriffsrichtung miteinander in Eingriff bringbar sind, um die Verbindung zwischen dem Stellelement und dem Spannzangenträger herzustellen.

Prinzipiell kann die Eingriffsrichtung dabei immer noch unterschiedlich ausgerichtet sein. Eine hinsichtlich der Bedingungen bei einer Werkzeugmaschine besonders günstige Lösung sieht dabei vor, daß die Eingriffsrichtung ungefähr parallel zur Spindelachse verläuft.

Prinzipiell wäre es denkbar, beim Verstellen der Einstellposition nicht nur den Spannzangenträger relativ zum Futtergehäuse zu bewegen, sondern gleichzeitig eine die Spannzangenbetätigung mitzubewegen, um das Werkstück in der Spannzange auch bei Variation der Einstellposition unverändert gespannt halten zu können.

Dies ist konstruktiv aufwendig.

Aus diesem Grund sieht eine vorteilhafte Lösung vor, daß das Werkstückspannfutter ein durch die Maschinensteuerung zumindest indirekt betätigbares Betätigungselement aufweist, mit welchem auf die Spannzangenbetätigung im Sinne einer das Werkstück noch in der Spannzange haltenden Haltestellung der Spannzange einwirkbar ist.

Das heißt, daß bei dieser Lösung das Spannen des Werkstücks in der Spannzange nicht auf üblichem Wege, das heißt mit dem üblichen Spannzylinder erfolgt, da die durch den Spannzylinder aufgebrachten und üblicherweise für ein sicheres Spannen bei der Bearbeitung erforderlichen Kräfte so groß sind, daß eine Verstellung des Spannzangenträgers relativ zum Futtergehäuse nicht mehr mit vertretbarem Kraftaufwand möglich sind.

Aus diesem Grund wird zum Verstellen des Spannzangenträgers relativ zum Futtergehäuse der übliche Spannzylinder deaktiviert und es erfolgt lediglich eine Beaufschlagung der Spannzangenbetätigung dergestalt, daß das Werkstück noch von der Spannzange in seiner Relativposition zur Spannzange gehalten wird und sich nicht in dieser löst.

Beispielsweise wäre es hierzu denkbar, zu dem üblichen Spannzylinder einen weiteren Spannzylinder als Betätigungselement vorzusehen, welcher in der Lage ist, eine derart geringe Spannkraft aufzubringen, die es erlaubt, das Werkstück noch in der Spannzange zu fixieren, jedoch gleichzeitig aber auch den Spannzangenträger relativ zum Futtergehäuse zu bewegen.

Diese Lösung ist konstruktiv aufwendig. Aus diesem Grund sieht eine vereinfachte Lösung vor, daß das Betätigungselement durch Einwirkung von außen auf das Werkstückspannfutter betätigbar ist.

Eine derartige Einwirkung von außen auf das Werkstückspannfutter kann in unterschiedlichster Art und Weise erfolgen. Beispielsweise wäre es denkbar, außerhalb des Werkstückspannfutters eine separate Betätigungseinrichtung vorzusehen, welche in einer definierten Stellung des Werkstückspannfutters auf das Betätigungselement wirkt.

Eine einfache Realisierungsmöglichkeit einer derartigen Betätigungseinrichtung sieht vor, daß diese durch den Werkzeugträger gebildet ist, so daß das Betätigungselement durch den Werkzeugträger betätigbar ist.

Da im erfindungsgemäßen Sinne ohnehin auf das Werkstückspannfutter mittels des Stellelements eingewirkt werden muß, um den Spannzangenträger relativ zum Futtergehäuse zu verstellen, sieht eine besonders bevorzugte Ausführungsform vor, daß das Betätigungselement auch durch das Stellelement betätigbar ist.

Eine besonders günstige Lösung sieht vor, daß das Betätigungselement am Spannzangenträger angeordnet und gemeinsam mit diesem beim Verändern der Einstellposition relativ zum Futtergehäuse bewegbar ist, so daß das Betätigungselement beim Bewegen des Spannzangenträgers relativ zum Futtergehäuse durch das Stellelement mitwandert und somit auch durch das Stellelement mitbetätigt werden kann.

Grundsätzlich wäre es dabei denkbar, daß das Stellelement in zweifacher Weise auf das erfindungsgemäße Werkstückspannfutter einwirkt, nämlich einerseits auf die Aufnahme und andererseits auf das Betätigungselement.

Eine konstruktiv besonders günstige Lösung sieht vor, daß das Betätigungselement die Aufnahme für das Stellelement trägt, so daß das Stellelement in besonders einfacher Weise mit der Aufnahme in Wirkverbindung treten kann und gleichzeitig das Betätigungselement betätigen kann.

Eine zweckmäßige Konstruktion sieht daher vor, daß das Betätigungselement in Eingriffsrichtung des Stellelements bewegbar ist, so daß durch Bewegen des Stellelements in Eingriffsrichtung gleichzeitig eine Betätigung des Betätigungselements erfolgt, um auf die Spannzangenbetätigung einzuwirken.

Konstruktiv hat es sich dabei als besonders günstig erwiesen, wenn das Betätigungselement ungefähr parallel zur Spindelachse bewegbar ist.

Hinsichtlich der Anordnung des Stellelements an der erfindungsgemäßen Werkzeugmaschine sind die unterschiedlichsten Möglichkeiten denkbar. Beispielsweise wäre es denkbar, für das Stellelement eine eigene Bewegungseinrichtung vorzusehen.

Eine konstruktiv besonders günstige Lösung sieht jedoch vor, daß das Stellelement an dem durch die Maschinensteuerung bewegbaren Werkzeugträger gehalten ist, so daß die für den Werkzeugträger vorgesehenen und durch die Maschinensteuerung steuerbaren Achsen gleichzeitig als Bewegungsachsen für die Bewegung des Stellelements zur Verfügung stehen.

Dabei wäre es denkbar, das Stellelement an dem Werkzeugträger zusätzlich zu dem Werkzeug anzuordnen. Eine besonders günstige Lösung sieht jedoch vor, daß das Stellelement in dem Werkzeugträger anstelle eines Werkzeugs angeordnet ist.

Dabei kann der Werkzeugträger als Einfachwerkzeugträger ausgebildet sein und es ist jeweils das Stellelement gegen ein Werkzeug einzuwechseln, wenn das Stellelement benötigt wird.

Es ist aber auch denkbar, den Werkzeugträger als Mehrfachwerkzeugträger auszubilden, beispielsweise als Werkzeugrevolver, und eine Werkzeugstation mit dem Stellelement zumindest dann zu bestücken, wenn eine Veränderung der Einstellposition der Spannzange relativ zum Futtergehäuse ansteht.

Besonders günstig läßt sich das erfindungsgemäße Konzept dann realisieren, wenn der Werkzeugträger durch die Maschinensteuerung in Eingriffsrichtung des Stellelements bewegbar ist.

Ferner ist es günstig, wenn der Werkzeugträger durch die Maschinensteuerung quer zur Eingriffsrichtung des Stellelements bewegbar ist, so daß sich in einfacher Weise das Stellelement relativ zur Aufnahme ausrichten läßt, um auf die Aufnahme einzuwirken.

Ein besonders vorteilhaftes Ausführungsbeispiel sieht vor, daß mittels des Stellelements eine Festlegung des Spannzangenträgers relativ zum Maschinenbett erreichbar ist, und daß die Relativbewegung zwischen dem Futtergehäuse und dem Spannzangenträger durch eine von der Maschinensteuerung gesteuerte Drehung der Werkstückspindel um die C-Achse erreichbar ist.

Diese Lösung sieht vor, die C-Achse der Werkstückspindel dazu auszunutzen, um die Einstellposition des Spannzangenträgers relativ zum Futtergehäuse zu variieren, während das Feststellelement lediglich dazu dient, den Spannzangenträger relativ zum Maschinenbett festzulegen.

Diese Lösung bietet sich insbesondere dann an, wenn der Spanzangenträger um eine zur Spindelachse exzentrische Achse drehbar in dem Futtergehäuse gelagert ist.

Diese Lösung ist aber auch dann realisierbar, wenn der Spannzangenträger linear verschiebbar im Futtergehäuse gelagert ist.

Eine andere vorteilhafte Lösung sieht vor, daß bei feststehender Werkstückspindel mittels des Stellelements eine Bewegung des Spannzangenträgers relativ zum Futtergehäuse dadurch erreichbar ist, daß der Spannzangenträger durch eine von der Maschinensteuerung steuerbare und das Stellelement relativ zum Futtergehäuse bewegende Achse bewegbar ist, das heißt, daß beispielsweise das Stellelement durch den längs mindestens einer Achse bewegbaren Werkzeugträger relativ zum Futtergehäuse bewegbar ist.

Die Erfindung betrifft aber außerdem ein Werkstückspannfutter für eine um eine Spindelachse drehbare Werkzeugspindel einer Werkzeugmaschine.

Die eingangs genannte Aufgabe wird bei einem derartigen Werkstückspannfutter für eine um eine Spindelachse drehbare Werkzeugspindel einer Werkzeugmaschine, in dem das Werkstück mit einstellbarer Exzentrizität bezüglich der Spindelachse spannbar ist, wobei das Werkstückspannfutter ein Futtergehäuse, eine Spannzangenbetätigung und einen in dem Futtergehäuse angeordneten Spannzangenträger mit einer in diesem gehaltenen Spannzange aufweist, welch letztere durch Bewegen des Spannzangenträgers relativ zum Futtergehäuse in zur Spindelachse konzentrische oder exzentrische Einstellpositionen bringbar ist, erfindungsgemäß dadurch gelöst, daß zum Einstellen der Einstellpositionen der Spannzange am Spannzangenträger eine Aufnahme vorgesehen ist, welche so ausgebildet ist, daß sie mit einem Stellelement der Werkzeugmaschine in Wirkverbindung bringbar ist, und daß der Spannzangenträger in dem Futtergehäuse zur Veränderung der Einstellposition derart bewegbar gelagert ist, daß durch die Wirkverbindung zwischen dem Stellelement und dem Spannzangenträger die Relativbewegung zwischen dem Spannzangenträger und dem Futtergehäuse erreichbar ist.

Der Vorteil der erfindungsgemäßen Lösung ist somit darin zu sehen, daß damit in einfacher Weise ein Einwirken auf das Werkstückspannfutter möglich ist, um den Spannzangenträger relativ zum Futtergehäuse zu verstellen.

Beispielsweise könnte die Wirkverbindung zwischen der Aufnahme und dem Stellelement durch eine kraftschlüssige Verbindung, beispielsweise ein Einspannen der Aufnahme durch das Stellelement, erfolgen. Besonders günstig ist es jedoch, wenn die Aufnahme so ausgebildet ist, daß die Wirkverbindung zwischen der Aufnahme und dem Stellelement durch Formschluß erfolgt.

Eine besonders zweckmäßige Lösung sieht dabei vor, daß die Aufnahme so ausgebildet ist, daß die formschlüssige Verbindung von Stellelement und Aufnahme durch eine Relativbewegung in einer Eingriffsrichtung erreichbar ist, welche quer zur Bewegungsrichtung des Spannzangenträgers relativ zum Futtergehäuse verläuft.

Besonders zweckmäßig lassen sich Stellelement und Aufnahme in Wirkverbindung bringen, wenn die Eingriffsrichtung ungefähr parallel zur Spindelachse verläuft.

Im Zusammenhang mit den bislang erläuterten Ausführungsbeispielen des erfindungsgemäßen Werkstückspannfutters wird lediglich auf die Verstellung des Spannzangenträgers relativ zum Futtergehäuse eingegangen.

Um eine Verstellung des Spannzangenträgers relativ zum Futtergehäuse mit vertretbarem Kraftaufwand durchführen zu können, ist es erforderlich, die übliche Beaufschlagung der Spannzange mittels des Spannzylinders zu lösen, da die vom Spannzylinder zum Spannen des Werkstücks mittels der Spannzange erzeugten Kräfte eine Bewegung des Spannzangenträgers relativ zum Futtergehäuse mit sinnvollem Kraftaufwand verhindern.

Bei gelöster Spannung des Werkstücks in der Spannzange kann sich dieses in der Spannzange lösen und insbesondere kann sich die Positionierung des Werkstücks relativ zur Spannzange und somit relativ zur Werkstückspindel verändern, so daß die Präzision der Bearbeitung verloren geht.

Aus diesem Grund ist bei einer besonders vorteilhaften Ausführungsform des erfindungsgemäßen Werkstückspannfutters vorgesehen, daß bei der Relativbewegung zwischen dem Spannzangenträger und dem Futtergehäuse die Spannzangenbetätigung in Richtung einer das Werkstück noch in der Spannzange haltenden Haltestellung der Spannzange beaufschlagbar ist.

Dies könnte beispielsweise dadurch erreichbar sein, daß ein zusätzlicher Spannzylinder oder eine zusätzliche Stufe des vorhandenen Spannzylinders vorgesehen ist, welche ein Spannen des Werkstücks mittels der Spannzange bei geringer Spannkraft erlaubt.

Die Spannkraft ist vorzugsweise so bemessen, daß das Werkstück ohne Bearbeitung noch sicher in der Spannzange gehalten wird.

Die Spannkraft ist dabei vorzugsweise kleiner als ungefähr 5%, vorzugsweise kleiner als ungefähr 1% noch besser ungefähr 0,5% der üblichen Spannkraft.

Eine andere Lösung sieht beispielsweise einen elastischen Kraftspeicher vor, welcher selbst bei gelöstem Spannzylinder dafür sorgt, daß die Spannzangenbetätigung noch mit einer ausreichend großen Kraft auf die Spannzange einwirkt, um das Werkstück ohne Bearbeitung noch sicher gespannt zu halten.

Eine besonders bevorzugte Lösung sieht vor, daß das Werkstückspannfutter ein von außerhalb desselben betätigbares Betätigungselement aufweist, mit welchem auf die Spannzangenbetätigung im Sinne einer das Werkstück noch in der Spannzange haltenden Haltestellung der Spannzange einwirkbar ist.

Durch ein derartiges Betätigungselement besteht die Möglichkeit, gezielt auf dieses einzuwirken und somit gezielt dann, wenn eine Relativbewegung von Spannzangenträger und Futtergehäuse erfolgen soll, das Werkstück in der Spannzange noch sicher zu halten.

Eine besonders vorteilhafte Ausbildung des erfindungsgemäßen Werkstückspannfutters sieht vor, daß das Betätigungselement durch Einwirken auf das Werkstückspannfutter von außen betätigbar ist.

Da ohnehin mittels des Stellelements ein Einwirken auf das Werkstückspannfutter zum Variieren der Einstellposition erforderlich ist, sieht eine besonders günstige Lösung vor, daß das Betätigungselement durch das Stellelement betätigbar ist.

Um eine derartige Betätigung durch das Stellelement vornehmen zu können, hat es sich als besonders günstig erwiesen, wenn das Betätigungselement am Spannzangenträger angeordnet und gemeinsam mit diesem beim Verändern der Einstellposition relativ zum Futtergehäuse bewegbar ist, so daß beim Verstellen des Spannzangenträgers gleichzeitig in einfacher Weise eine Beaufschlagung des Bewegungselements erfolgen kann.

Prinzipiell wäre es denkbar, mit dem Stellelement in zweifacher Weise einzuwirken, nämlich einmal auf das Betätigungselement und einmal auf die Aufnahme. Besonders günstig ist es jedoch, wenn das Betätigungselement die Aufnahme für das Stellelement trägt, so daß eine Einwirkung auf die Aufnahme gleichzeitig einer Einwirkung auf das Betätigungselement entspricht.

Besonders einfach läßt sich mittels des Stellelements auf das Betätigungselement dann einwirken, wenn das Betätigungselement in Eingriffsrichtung des Stellelements bewegbar gelagert ist.

Konstruktiv läßt sich besonders vorteilhaft eine Lösung realisieren, bei welcher das Betätigungselement ungefähr parallel zur Spindelachse bewegbar ist.

Hinsichtlich der Art der Bewegbarkeit des Spannzangenträgers relativ zum Futtergehäuse wurden bislang keine näheren Angaben gemacht. So sieht eine vorteilhafte Lösung vor, daß der Spannzangenträger im Futtergehäuse um eine zur Spindelachse exzentrisch angeordnete, jedoch parallele Achse drehbar ist und daß die Spannzange mit ihrer Symmetrieachse exzentrisch, jedoch parallel zu dieser Achse angeordnet ist.

Damit besteht die Möglichkeit, durch Verdrehen des Spannzangenträgers relativ zum Futtergehäuse den Abstand zwischen der Symmetrieachse und der Spindelachse zu variieren und somit die Spannzange in unterschiedlichen konzentrischen oder exzentrischen Einstellpositionen relativ zur Spindelachse anzuordnen.

Alternativ dazu sieht eine andere Lösung vor, daß der Spannzangenträger in dem Futtergehäuse linear verschiebbar ist, so daß die Spannzange durch Linearverschiebung des Spannzangenträgers entweder konzentrisch zur Spindelachse angeordnet werden kann oder in Richtung zweier, einander entgegengesetzter Richtungen exzentrisch angeordnet werden kann, wobei die Symmetrieachse der Spannzange stets parallel zur Spindelachse verläuft.

Besonders zweckmäßig läßt sich das erfindungsgemäße Werkstückspannfutter dann einsetzen, wenn dies in einer Werkzeugmaschine entsprechend einer der voranstehend beschriebenen Ausführungsformen eingesetzt wird.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine Draufsicht auf eine erfindungsgemäße Werkzeugmaschine mit geschnittener Spindel;
- Fig. 2: eine schematische Ansicht eines exemplarischen Werkstücks;
- Fig. 3: einen Schnitt parallel zur Spindelachse durch ein erstes Ausführungsbeispiel eines erfindungsgemäßen Werkstückspannfutters bei welchem der Spannzangenträger relativ zum Futtergehäuse so verdreht ist, daß die maximale Exzentrizität der Spannzange relativ zur Spindelachse vorliegt;
- Fig. 4: einen Schnitt ähnlich Fig. 3 durch das erste Ausführungsbeispiel, wobei der Spannzangenträger relativ zum Futtergehäuse so verdreht ist, daß die Spannzange konzentrisch zur Spindelachse angeordnet ist;
- Fig. 5: eine Draufsicht in Richtung des Pfeils A in Fig. 3;
- Fig. 6: einen Schnitt längs Linie 6-6 in Fig. 4 und
- Fig. 7: einen Schnitt ähnlich Fig. 3 durch ein zweites Ausführungsbeispiel einer erfindungsgemäßen Werkstückspanneinrichtung.

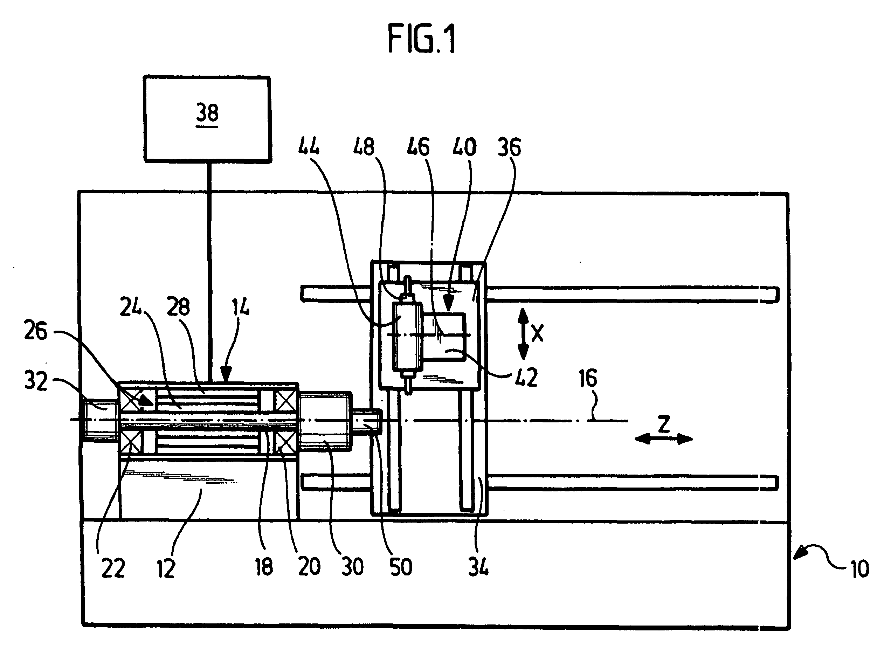

Ein in Fig. 1 dargestelltes Ausführungsbeispiel einer erfindungsgemäß ausgerüsteten Werkzeugmaschine umfaßt ein Maschinenbett 10, an welchem ein Spindelkasten 12 gehalten ist, in welchem eine als Ganzes mit 14 bezeichnete Werkstückspindel um eine Spindelachse 16 drehbar gelagert ist.

Die Werkstückspindel 14 umfaßt beispielsweise ein Spindelrohr 18 und ist mit diesem an in Abstand voneinander angeordneten Spindellagern 20 und 22 drehbar gelagert.

Zwischen den beiden Spindellagern 20 und 22 sitzt auf dem Spindelrohr 18 ein Rotor 24 eines als Ganzes mit 26 bezeichneten Spindelmotors, der außerdem einen den Rotor 24 umschließenden Stator 28 aufweist.

Auf einer dem Spindelmotor 26 abgewandten Seite des vorderen Spindellagers 20 ist ein als Ganzes mit 30 bezeichnetes Werkstückspannfutter angeordnet, welches drehfest mit dem Spindelrohr 18 verbunden und durch dieses um die Spindelachse 16 rotierend antreibbar ist.

Ferner ist auf einer dem Spindelmotor 26 abgewandten Seite des hinteren Spindellagers 22 ein Spannzylinder 32, mit welchem das Werkstückspannfutter 30 betätigbar ist.

Ferner ist auf dem Maschinenbett 10 noch ein parallel zur Spindelachse 16 in einer Z-Richtung bewegbarer Z-Schlitten 34 angeordnet, auf welchem ein in X-Richtung senkrecht zur Spindelachse 16 bewegbarer X-Schlitten 36 sitzt, der seinerseits einen als Ganzes mit 40 bezeichneten Werkzeugträger trägt.

Der Werkzeugträger 40 ist beispielsweise als Revolver ausgebildet und umfaßt ein auf dem X-Schlitten 36 sitzendes Revolvergehäuse 42, an welchem ein Revolverkopf 44 um eine Revolverachse 46 drehbar gelagert ist.

Der Revolverkopf 44 trägt dabei eine Vielzahl von Werkzeugen 48, mit welchen ein in dem Werkstückspannfutter 30 gespanntes Werkstück 50 bearbeitbar ist.

Zum Verfahren des Z-Schlittens 34 und des X-Schlittens 36 ist eine speicherprogrammierbare Maschinensteuerung 38 vorgesehen, mit welcher außerdem der Revolverkopf 44 und seine Revolverachse 46 in einzelne Schaltstellungen drehbar ist. Außerdem ist vorzugsweise der Spindelmotor 26 durch die Maschinensteuerung 38 als gesteuerte C-Achse betreibbar.

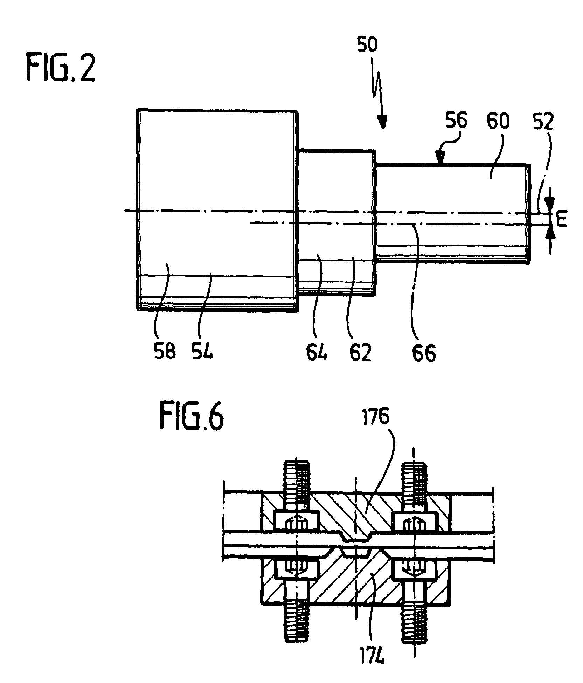

Das Werkstück 50 soll, wie in Fig. 2 dargestellt, beispielsweise so bearbeitet werden, daß es zwei konzentrisch zu einer Werkstückachse 52 angeordnete Abschnitte 54 und 56 aufweist, die beispielsweise mit zur Werkstückachse 52 zylindrischen Mantelflächen 58 und 60 versehen sind, und durch eines oder mehrere der Werkzeuge 48 zu bearbeiten sind.

Ferner ist zwischen den Abschnitten 54 und 56 ein Abschnitt 62 vorgesehen, welcher so bearbeitet werden soll, daß eine Mantelfläche 64 desselben konzentrisch zu einer Achse 66 verläuft, die gegenüber der Werkstückachse 52 um einen Betrag E radial versetzt zur Werkstückachse 52 verläuft.

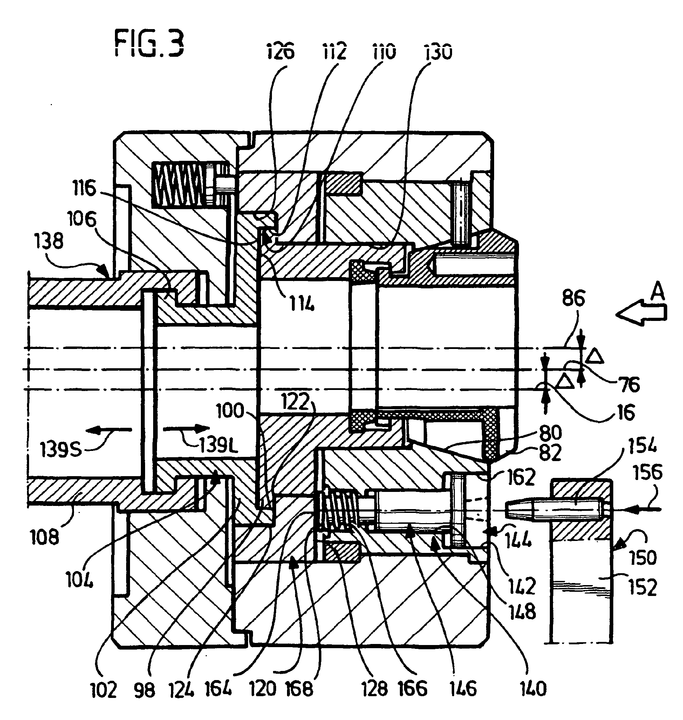

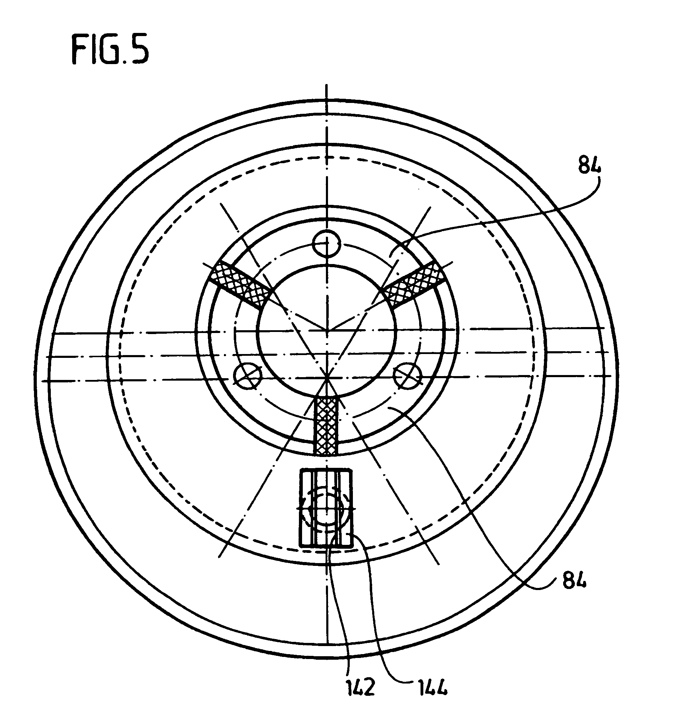

Ein in Fig. 3 bis 6 dargestelltes erstes Ausführungsbeispiel des erfindungsgemäßen Werkstückspannfutters 30 umfaßt ein Futtergehäuse 70, welches einen Spannzangenträger 74 ringförmig umschließt und zur Lagerung des Spannzangenträgers 74 eine zylindrische Lagerfläche 72 aufweist, deren Zylinderachse 76 um einen Betrag Δ radial versetzt, jedoch parallel zur Spindelachse 16 verläuft.

An der zylindrischen Lagerfläche 72 ist der Spannzangenträger 74 mit einer äußeren Führungsfläche 78 drehbar, jedoch in Richtung der Zylinderachse 76 unverschieblich geführt, deren Zylinderachse mit der Zylinderachse 76 zusammenfällt.

In dem Spannzangenträger 74 ist wiederum eine Aufnahme 80, beispielsweise in Form einer Konusfläche, für eine als Ganzes mit 82 bezeichnete Spannzange angeordnet, wobei die Aufnahme 80 eine Symmetrieachse 76 aufweist, die parallel zur Spindelachse 16 verläuft, jedoch gegenüber der Zylinderachse 76 ebenfalls um den Betrag Δ versetzt angeordnet ist.

Die Spannzange 82 ist dabei als konventionelle Spannzange ausgebildet und liegt mit Außenseiten 88 ihrer Spannfinger 84 an der die Aufnahme 80 bildenden Konusfläche an. Damit ist eine in der Spannzange 82 angeordnete und von den Spannfingern 84 umschlossene Werkstückaufnahme 90 als symmetrisch zur Symmetrieachse 86 verlaufender Zylinderraum ausgebildet, jedoch in seiner radialen Erstreckung zur Symmetrieachse 86 variabel, je nach dem, ob die Spannzange 82 von dem Spannzylinder 32 zugbeaufschlagt ist oder nicht.

Zur Zugbeaufschlagung der Spannzange 82 ist eine als Ganzes mit 92 bezeichnete Zughülse vorgesehen, welche mit einem Flanschring 94 in eine Betätigungsnut 96 der Spannfinger 84 eingreift, so daß mittels der Zughülse 92 die Spannzange 82 in die sich konisch verengende Spannzangenaufnahme 80 hineinziehbar oder aus dieser herausschiebbar ist.

Dabei verläuft der Flanschring 94 symmetrisch zur Symmetrieachse 86 der Spannzangenaufnahme 80. Die Zughülse 92 umfaßt ferner auf ihrer dem ersten Flanschring 94 gegenüberliegenden Seite einen zweiten Flanschring 98, welcher symmetrisch zur Zylinderachse 76 verläuft und in einer als Ganzes mit 100 bezeichneten Ringnut gelagert ist, die ebenfalls rotationssymmetrisch zur Zylinderachse 76 verläuft.

Die Ringnut 100 wird dabei gebildet durch ein Vorderteil 102 eines Zugelements 104, wobei das Vorderteil 102 über einen Bajonettverschluß 106 mit einem hinteren Teil 108 des Zugelements 104 verbunden ist, der sich durch das Spindelrohr 18 hindurch bis zum Spannzylinder 32 erstreckt.

Das Vorderteil 102 des Zugelements 104 bildet dabei eine stufenförmige Vertiefung 110 mit einer zylindrisch um die Zylinderachse 76 umlaufenden Wand 112 und einer senkrecht zur Zylinderachse 76 verlaufenden Flanschfläche 114, an welcher die Zughülse 92 mit einer hinteren Stirnseite 116 anliegt.

Die Vertiefung 100 übergreift ein Haltering 120, welcher mit einer Flanschfläche 122 parallel zur Flanschfläche 114 verläuft, so daß diese beiden Flanschflächen 114 und 122 die Seitenwände der radial zur Zylinderachse 76 verlaufenden Ringnut 100 bilden, während die zylindrische Wand 112 den Nutgrund bildet.

Der Haltering 120 ist vorzugsweise an dem Vorderteil 102 dadurch fixiert, daß er eine zylindrisch zur Zylinderachse 76 verlaufende Außenfläche 124 des Vorderteils 102 übergreift und mit einer der Außenfläche 124 zugewandten Innenfläche 126 auf dieser aufsitzt und fixiert ist.

Ferner weist dieser Haltering 120 eine dem Spannzangenträger 74 zugewandte Stirnfläche 128 auf.

Die Zughülse 92 ist ferner drehfest in einem zentralen Durchbruch 130 des Spannzangenträgers 74 gehalten, welcher rotationssymmetrisch zur Symmetrieachse 86 verläuft und in diesem Durchbruch 130 in Richtung der Symmetrieachse 86 verschieblich geführt, so daß durch die Zughülse 92 eine Zugkraft von dem Zugelement 104 auf die Spannzange 82 übertragbar ist.

Durch die Lagerung des Spannzangenträgers 74 mit rotationssymmetrisch zur Zylinderachse 76 verlaufenden Lagerflächen 72 und Führungsflächen 78, so daß die Zylinderachse 76 die Drehachse für den Spannzangenträger 74 relativ zum Futtergehäuse 70 darstellt und die drehbare Lagerung des zweiten Flanschrings 98 der Zughülse 92 in der rotationssymmetrisch zur Zylinderachse 76 verlaufenden Ringnut 100 ist die Einheit aus dem Spannzangenträger 74, der Spannzange 82 und der Zughülse 92 um die Zylinderachse 76 als Drehachse relativ zum Futtergehäuse 70 und relativ zum Vorderteil 102 des Zugelements 104 drehbar, wobei in der in Fig. 3 dargestellten Extremstellung sich zu dem radialen Versatz der Zylinderachse 76 gegenüber der Spindelachse 16 um den Betrag Δ sich zusätzlich der radiale Versatz der Symmetrieachse 86 gegenüber der Zylinderachse 76 um den Betrag Δ addiert, so daß insgesamt die Symmetrieachse 86 in der in Fig. 3 dargestellten Extremstellung um den Betrag 2Δ gegenüber der Spindelachse 16 radial versetzt ist, während die Zylinderachse 76 mittig zwischen der Symmetrieachse 86 und der Spindelachse 16 liegt.

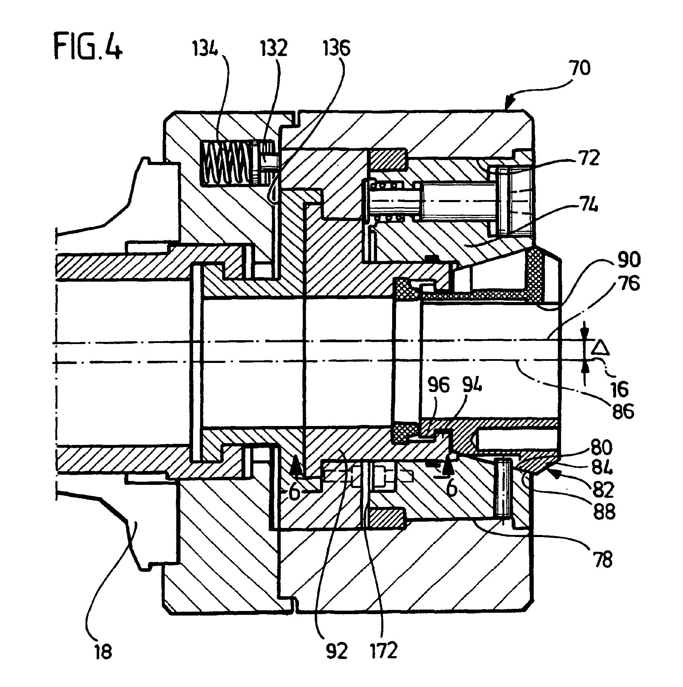

In der anderen, in Fig. 4 dargestellten Extremstellung ist die Einheit aus dem Spannzangenträger 74 der Spannzange 82 und der Zughülse 92 so gedreht, daß sich der Versatz der Symmetrieachse 86 gegenüber der Zylinderachse 76 um den Betrag Δ und der Versatz der Zylinderachse 76 gegenüber der Spindelachse 16 um den Betrag Δ gerade wieder aufheben, so daß die Symmetrieachse 86 koaxial zur Spindelachse 16 verläuft.

In dieser, in Fig. 4 dargestellten Stellung des Spannzangenträgers 74 liegt somit die Spannzangenaufnahme 80 wiederum rotationssymmetrisch zur Spindelachse 16 und folglich ist auch die Werkstückaufnahme 90 wiederum rotationssymmetrisch zur Spindelachse 16 wie bei einem üblichen Werkstückspannfutter angeordnet.

Um sicherzustellen, daß die Spannzange 82 bei gelöstem Spannzylinder 32 und somit entfallender Zugwirkung des Zugelements 104 übergeht, sind im Futtergehäuse 70 mehrere Druckkörper 132 angeordnet, welche durch eine Druckfeder 134 in Richtung des Halterings 120 beaufschlagt sind und dabei auf eine hintere Stirnfläche 136 des Halterings 120 wirken, welche der vorderen Stirnfläche 128 des Halterings 120 gegenüberliegend angeordnet ist.

Der Spannzylinder 32 bildet somit zusammen mit dem Zugelement 104, dem Haltering 120, der Zughülse 92 und den Druckkörpern 132 mit den Druckfedern 134 eine als Ganzes mit 138 bezeichnete Spannzangenbetätigung, welche eine Drehung der Zughülse 92 um die Zylinderachse 76 zuläßt.

Bei inaktivem Spannzylinder 32 verschieben die Druckkörper 132 den Haltering 120 und mit diesem das Vorderteil 102 des Zugelements 104 in Löserichtung 139L des Spannzangenträgers 74 und daraus resultiert ebenfalls eine Verschiebung der Zughülse 92 in dieser Richtung, welche dann ihrerseits mit dem ersten Flanschring 94 auf die Spannzange 82 dergestalt einwirkt, daß diese so weit aus der konischen Aufnahme 80 herausgeschoben wird, daß die Spannfinger 84 in ihre maximal geöffnete Stellung übergehen.

Wirkt jedoch der Spannzylinder 32 auf das Zugelement 104 in Spannrichtung 139S, so wird der Haltering 120 gegen die Kraftwirkung des Druckkörpers 132 und der Druckfedern 134 verschoben und somit die Spannzange 82 in die konische Aufnahme 80 hineingezogen und das in der Werkstückaufnahme 90 der Spannzange 82 eingesetzte Werkstück 50 gespannt.

Durch Verdrehen des Spannzangenträgers 74 relativ zum Futtergehäuse 70 besteht nun die Möglichkeit, auch Werkstücke 50, wie in Fig. 2 dargestellt, herzustellen, wobei beispielsweise die Drehbearbeitung der Abschnitte 54 und 56 in der in Fig. 4 dargestellten Stellung des Spannzangenträgers 74 erfolgt, in welcher die Symmetrieachse 86 mit der Spindelachse 16 zusammenfällt.

Da die Drehbearbeitung des in der Arbeitsspindel 14 mittels des Werkstückspannfutters 30 gespannten Werkstücks 50 unter Einsatz eines der Werkzeuge 48 stets rotationssymmetrisch zur Spindelachse 16 erfolgt, liegt die Werkstückachse 52 bei Bearbeitung der Abschnitte 54 und 56 koaxial zur Spindelachse 16.

Um nun eine Bearbeitung des Abschnitts 62 des Werkstücks 50 durchführen zu können, dessen Achse 66 um die Exzentrizität E zur Werkstückachse 52 versetzt ist, erfolgt nun eine Drehung des Spannzangenträgers 74 relativ zum Futtergehäuse 70 unter Herausbewegen der Werkstückachse 52 aus ihrer zur Spindelachse 16 koaxialen Lage so weit, bis die Achse 66 mit der Spindelachse 16 zusammenfällt.

Ist im Extremfall die Exzentrizität E, das heißt der Betrag, um den die Achse 66 gegenüber der Werkstückachse 52 versetzt ist, gleich 2Δ, so erfolgt eine Drehung des Spannzangenträgers 74 relativ zum Futtergehäuse 70 bis in die in Fig. 3 dargestellte Stellung, wobei die Werkstückachse 52 stets koaxial zur Symmetrieachse 86 der Werkstückaufnahme 90 verläuft, so daß in der in Fig. 3 dargestellten Stellung die Werkstückachse 52 um den Betrag 2Δ gegenüber der Spindelachse 16 radial versetzt ist.

Erfolgt nun eine Bearbeitung des Werkstücks 50 mit dem Werkzeug 48, so entsteht eine zur Spindelachse 16 rotationssymmetrische Fläche, die die Mantelfläche 64 des Abschnitts 62 darstellt, wobei die Achse 66 zu der entstehenden Mantelfläche 64 koaxial zur Spindelachse 16 liegt.

Um eine derartige Drehbewegung des Spannzangenträgers 74 durchführen zu können, ist in dem Spannzangenträger 74, wie in Fig. 3, 4 und 5 dargestellt, ein Betätigungselement 140 vorgesehen, welches eine Aufnahme 142 in Form einer radial zur Zylinderachse 76 verlaufenden Nut aufweist, mit welcher ein Stellelement 150 in Eingriff bringbar ist, welches einen Arm 152 aufweist, an dessen vorderem Ende ein Dorn 154 angeordnet ist, der mit der Aufnahme 142 in Eingriff bringbar ist.

Das Stellelement 150 sitzt dabei am Revolverkopf 44 an einer für ein Werkzeug vorgesehenen Position und ist somit durch Drehen des Revolverkopfes um die Revolverachse 46 in eine dem Werkstückspannfutter 30 zugewandte Stellung bringbar und außerdem durch Verfahren des X-Schlittens 36 und des Z-Schlittens 34 relativ zum Werkstückspannfutter 30 mittels der Maschinensteuerung bewegbar.

Das Betätigungselement 140 umfaßt seinerseits einen stirnseitig mit der Aufnahme 142 versehenen Kopf 144, der drehfest in dem Spannzangenträger 74 gelagert ist, und auf einem Schieber 146 sitzt, welcher in einer Bohrung 148 im Spannzangenträger 74 parallel zur Zylinderachse 76 verschiebbar gelagert ist.

Vorzugsweise ist der Kopf 144 in einer Vertiefung 162 einer Stirnseite 164 des Spannzangenträgers 74 angeordnet und der Schieber 146 durchsetzt den gesamten Spannzangenträger 74 parallel zur Zylinderachse 76, so daß der Schieber 146 mit einer rückwärtigen Endfläche 164 der vorderen Stirnfläche 128 des Halterings 120 zugewandt steht.

Ferner ist der Schieber 146 von einer Druckfeder 166, welche sich einerseits am Spannzangenträger 74 abstützt und andererseits gegen einen auf dem Schieber 146 sitzenden Ring 168 wirkt, so beaufschlagt, daß die Endfläche 164 an der vorderen Stirnfläche 128 des Halterings 120 anliegt.

Außerdem ist der Schieber 146 so relativ zum Spannzangenträger 74 so verschiebbar, daß er in der Lage ist, den Bewegungen des Halterings 120 in Richtung der Zylinderachse 76 beim Spannen und Lösen der Spannzange 82 zu folgen. Wird somit der Haltering 120 durch die Einwirkung des zugelements 104 in der Spannrichtung 139S bewegt, so folgt der Schieber 146 dieser Bewegung und der Kopf 144 desselben senkt sich ebenfalls in die Vertiefung 162 hinein.

Ohne Druckbeaufschlagung des Spannzylinders 32 drücken nun die bereits beschriebenen Druckkörper 132 aufgrund der Druckfedern 134 den Haltering 120 in Löserichtung 139L, so daß der Schieber 146 in derselben Richtung verschoben wird und sich der Kopf 144 in Richtung der Endfläche 164 bewegt.

Um nun die Exzentrizität E für das zu bearbeitende Werkstück während des Spannens des Werkstücks 50 in der Spannzange 82 einstellen zu können, greift bei gespanntem Werkstück 50 und wirksamen Spannzylinder 32 das Stellelement 150 mit dem Dorn 154 in die Aufnahme 142 und beaufschlagt den Schieber 146 in Spannrichtung 139S, so daß selbst dann, wenn der Spannzylinder 32 geöffnet, das heißt inaktiv geschaltet wird und nicht mehr mit dem Zugelement 104 den Haltering 120 in Spannrichtung 139S mit Kraft beaufschlagt, der Haltering 120 und somit die Spannzangenbetätigung 38 daran gehindert wird, sich in Löserichtung 139L zu bewegen, sondern in einer Haltestellung verbleibt, wobei allerdings die Kraftwirkung über das Stellelement 150 und das Betätigungselement 140 geringer ist.

Damit bleibt das Werkstück 50 in der Werkstückaufnahme 90 durch die Spannzange 82 gespannt, allerdings ist die Spannkraft ein Bruchteil der vom Spannzylinder 32 ausgeübten Kraft, beispielsweise weniger als ungefähr 1%, noch besser weniger als 0,5% der Spannkraft bei aktivem Spannzylinder beträgt.

Diese reduzierte Spannkraft hat jedoch den Vorteil, daß damit der Spannzangenträger 74 nicht mehr kraftschlüssig in dem Futtergehäuse 70 festgelegt ist, sondern sich relativ zum Futtergehäuse 70 drehen kann. Diese Relativdrehung wird dadurch bewirkt, daß das Stellelement 150 aufgrund des in die Aufnahme 142 eingreifenden Dorns 154 den Spannzangenträger 74 bezüglich einer Drehung um die Zylinderachse 76 festhält, jedoch der Spindelmotor 26, in diesem Fall durch die Maschinensteuerung 38 als gesteuerte C-Achse betrieben, um einen definierten Winkel gedreht wird, so daß sich das Futtergehäuse 70 relativ zum Spannzangenträger 74 dreht und somit eine stufenlose Verstellung des Exzentrizität E möglich ist, die sich aus dem radialen Abstand der Symmetrieachse 86 von der Spindelachse 16 ergibt.

Damit ist durch die gesteuerte C-Achse die Exzentrizität der Spannzange 82 zwischen der in Fig. 4 dargestellten Exzentrizität E gleich 0 bis zur Exzentrizität E gleich 2Δ stufenlos verstellbar.

Der Vorteil der erfindungsgemäßen Lösung ist ferner darin zu sehen, daß das Stellelement 150 anstelle eines Werkzeugs im Werkzeugträger 40 montierbar ist und somit durch Bewegen des X-Schlittens 36 und Z-Schlittens 34 der Dorn 154 mit der Aufnahme 142 in Eingriff bringbar ist und außerdem das Stellelement durch Einwirken des Dorns 154 auf der Aufnahme 142 in der Eingriffsrichtung 156 in der Lage ist, nicht nur den Spannzangenträger 74 drehfest relativ zur Zylinderachse 76 beim Drehen des Futtergehäuses 70 festzuhalten, sondern gleichzeitig in der Lage ist, den Haltering 120 gegen die Kraftwirkung der Druckkörper 132 und der Druckfedern 134 in Spannrichtung 139S beaufschlagt zu halten, so daß das Werkstück 50 beim Verstellen der Exzentrizität E in der Werkstückaufnahme 90 der Spannzange 82 so weit gespannt bleibt, daß es seine Position relativ zur Spannzange 82 beibehält.

Damit ist die Möglichkeit geschaffen, während des Bearbeitens des Werkstücks 50 die Exzentrizität der Bearbeitung bei Aufrechterhaltung der Fixierung des Werkstücks 50 in der Spannzange 82 stufenlos zu verändern.

Um die in Fig. 4 dargestellte Stellung des Spannzangenträgers 74 mit Exzentrizität 0, das heißt bei mit der Spindelachse 16 zusammenfallender Symmetrieachse 86 eindeutig festzulegen, ist sowohl der drehfest im Futtergehäuse 70 gehaltene Haltering 120 im Bereich seiner vorderen Stirnfläche 128 als auch der Spannzangenträger 74 im Bereich seiner der Stirnfläche 128 zugewandten Endfläche 172 jeweils mit einem Formschlußelement 174, 176 eines zusammenpassenden Paares von Formschlußelementen versehen, die in der Stellung mit Exzentrizität 0 und nichtbeaufschlagtem Betätigungselement 140 aufgrund der Kraftwirkung der Druckkörper 132 und der Druckfedern 134 bei inaktivem Spannzylinder 132 in Eingriff bringbar sind, um die Stellung mit der Exzentrizität 0 eindeutig festzulegen.

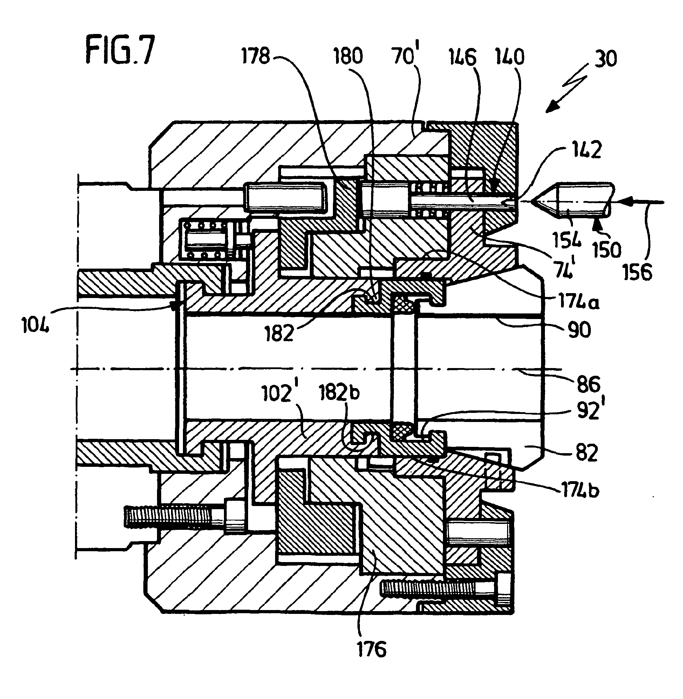

Bei einem zweiten Ausführungsbeispiel eines erfindungsgemäßen Werkstückspannfutters 30', dargestellt in Fig. 7 sind diejenigen Teile, die mit denen des ersten Ausführungsbeispiels identisch sind, mit denselben Bezugszeichen versehen, so daß hinsichtlich der Beschreibung derselben auf die Ausführungen zum ersten Ausführungsbeispiel vollinhaltlich Bezug genommen werden kann.

Im Gegensatz zum ersten Ausführungsbeispiel ist bei dem zweiten Ausführungsbeispiel in dem Futtergehäuse 70' der Spannzangenträger 74' nicht drehbar, sondern linear verschiebbar ausgebildet, und zwar in Richtung senkrecht zur Zeichenebene der Fig. 7.

Vorzugsweise ist dabei der Spannzangenträger 74 an zueinander parallelen Planflächen 174a und 174b an einem Führungskörper 176 des Futtergehäuses 70' senkrecht zur Zeichenebene in Fig. 7 verschiebbar geführt.

Der Spannzangenträger 74 trägt außerdem das Betätigungselement 140, das mit der Aufnahme 142 für den Dorn 154 des Stellelements 150 versehen ist und außerdem einen Schieber 146 aufweist, der in der Eingriffsrichtung 156 verschiebbar ist, um einen Druckring 178 zu beaufschlagen, welcher fest mit dem Zugelement 104 verbunden ist.

Ferner ist die Spannzange 82 über die Zughülse 92' mit dem Vorderteil 102' des Zugelements 104 verbunden, wobei Nasen 180 in parallel zu den Führungsflächen 174a und 174b verlaufende lineare Nuten 182a und 182b eingreifen, so daß eine Verschiebung der Zughülse 92' senkrecht zur Zeichenebene in Fig. 7 gemeinsam mit dem Spannzangenträger 74' möglich ist.

Durch Beaufschlagen der Aufnahme 142 mittels des Dorns 154 ist nun einerseits der Druckring 178 derart in der Spannrichtung beaufschlagbar, daß die Spannzange 82 ein in die Werkstückaufnahme 90 eingesetztes Werkstück 50 gespannt hält und gleichzeitig ist durch gesteuertes Bewegen des Dorns 154 durch die Maschinensteuerung 38, beispielsweise durch Bewegung des X-Schlittens 36 in X-Richtung der Spannzangenträger 74 senkrecht zur Zeichenebene in Fig. 7, so verschiebbar, daß die Symmetrieachse 86 der Werkstückaufnahme 90 von einer mit der Spindelachse 16 deckungsgleichen Stellung in eine auf einer Seite der Spindelachse 16 neben dieser liegende Stellung verschiebbar ist und somit ein Werkstück 50 bearbeitet werden kann, bei welchem der Abschnitt 64 rotationssymmetrisch zur Achse 66 liegt, die nicht mit der Werkstückachse 52 und somit auch nicht mit der Symmetrieachse 86 zusammenfällt.

Der Vorteil des zweiten Ausführungsbeispiels, dargestellt in Fig. 7 ist darin zu sehen, daß mit diesem eine Verstellung des Spannzangenträgers 74' in entgegengesetzte Richtungen realisierbar ist, das heißt, daß die Symmetrieachse 86 der Werkstückaufnahme 90 der Spannzange 82 in Richtung zweier entgegengesetzter radialer Richtungen zur Spindelachse 16 bewegbar ist und somit zwei um 180° zueinander versetzte Exzentrizitäten realisierbar sind, während bei dem ersten Ausführungsbeispiel nur in einer radialen Richtung zur Spindelachse 16 eine Exzentrizität realisierbar ist.

## Patentansprüche

1. Werkzeugmaschine zum Drehbearbeiten von Werkstücken (50) mit exzentrischen Abschnitten, umfassend einen in Richtung mindestens einer Achse (x, Z) bewegbaren Werkzeugträger (40), eine um eine Spindelachse (16) drehbar antreibbare Werkstückspindel (14), welche ein Werkstückspannfutter (30) umfaßt, in dem das Werkstück (50) mit variabel einstellbarer Exzentrizität bezüglich der Spindelachse (16) spannbar ist, wobei das Werkstückspannfutter (30) ein Futtergehäuse (70), eine Spannzangenbetätigung und einen in dem Futtergehäuse (70) angeordneten Spannzangenträger (74) mit einer in diesem gehaltenen Spannzange (82) aufweist, welch letztere durch Bewegen des Spannzangenträgers (74) relativ zum Futtergehäuse (70) in zur Spindelachse (16) konzentrische oder exzentrische Einstellpositionen bringbar ist, **dadurch gekennzeichnet, daß** die Werkzeugmaschine mindestens eine durch eine Maschinensteuerung (38) gesteuerte Achse (X, Z, C) aufweist, daß an der Werkzeugmaschine ein Stellelement (150) vorgesehen ist, welches zum Einstellen der jeweiligen Einstellposition der Spannzange (82) auf das Werkstückspannfutter (30) zu bewegbar ist und mit einer mit dem Spannzangenträger (74) verbundenen Aufnahme (142) in Wirkverbindung bringbar ist und daß in dieser Wirkverbindung zwischen dem Stellelement (150) und dem Spannzangenträger (74') die Relativbewegung zwischen dem Spannzangenträger (74) und dem Futtergehäuse (70) zur Veränderung der Einstellposition durch die mindestens eine gesteuerte Achse (C, X) mittels der Maschinensteuerung (38) steuerbar ist.

2. Werkzeugmaschine nach Anspruch 1, **dadurch gekennzeichnet, daß** das Stellelement (150) durch die Maschinensteuerung (38) relativ zur Aufnahme (142) in einer Eingriffsrichtung (156) bewegbar ist, welche quer zur Bewegungsrichtung des Spannzangenträgers (74) relativ zum Futtergehäuse (70) verläuft.

3. Werkzeugmaschine nach Anspruch 2, **dadurch gekennzeichnet, daß** die Eingriffsrichtung (156) ungefähr parallel zur Spindelachse (16) verläuft.

4. Werkzeugmaschine nach einem der voranstehenden Ansprüche, **dadurch gekennzeichnet, daß** das Werkstückspannfutter (30) ein durch die Maschinensteuerung (38) betätigbares Betätigungselement (140) aufweist, mit welchem auf die Spannzangenbetätigung (138) im Sinne einer das Werkstück (50) noch in der Spannzange (82) haltenden Haltestellung der Spannzange (82) einwirkbar ist.

5. Werkzeugmaschine nach Anspruch 4, **dadurch gekennzeichnet, daß** das Betätigungselement (140) durch Einwirken von Außen auf das Werkstückspannfutters (30) betätigbar ist.

6. Werkzeugmaschine nach Anspruch 5, **dadurch gekennzeichnet, daß** das Betätigungselement (140) durch den Werkzeugträger (40) betätigbar ist.

7. Werkzeugmaschine nach Anspruch 5 oder 6 , **dadurch gekennzeichnet, daß** das Betätigungselement (140) durch das Stellelement (150) betätigbar ist.

8. Werkzeugmaschine nach einem der Ansprüche 4 bis 7, **dadurch gekennzeichnet, daß** das Betätigungselement (140) am Spannzangenträger (74)angeordnet und gemeinsam mit diesem beim Verändern der Einstellposition relativ zum Futtergehäuse (70) bewegbar Ist.

9. Werkzeugmaschine nach einem der Ansprüche 4 bis 8, **dadurch gekennzeichnet, daß** das Betätigungselement (140) die Aufnahme (142) für das Stellelement (150) trägt.

10. Werkzeugmaschine nach einem der Ansprüche 4 bis 9, **dadurch gekennzeichnet, daß** das Betätigungselement (140) in Eingriffsrichtung (156) des Stellelements (150) bewegbar ist.

11. Werkzeugmaschine nach einem der Ansprüche 4 bis 10, **dadurch gekennzeichnet, daß** das Betätigungselement (140) ungefähr parallel zur Spindelachse (16) bewegbar ist.

12. Werkzeugmaschine nach einem der voranstehenden Ansprüche, **dadurch gekennzeichnet, daß** das Stellelement (150) an dem durch die Maschinensteuerung (38) bewegbaren Werkzeugträger (40) gehalten ist.

13. Werkzeugmaschine nach Anspruch 12, **dadurch gekennzeichnet, daß** das Stellelement (150) in dem Werkzeugträger (40) anstelle eines Werkzeugs (48) angeordnet ist.

14. Werkzeugmaschine nach Anspruch 12 oder 13, **dadurch gekennzeichnet, daß** der Werkzeugträger (40) durch die Maschinensteuerung (38) in Eingriffsrichtung (156) des Stellelements (150) bewegbar ist.

15. Werkzeugmaschine nach einem der Ansprüche 12 bis 14, **dadurch gekennzeichnet, daß** der Werkzeugträger (40) durch die Maschinensteuerung (38) quer zur Eingriffsrichtung (156) des Stellelements (150) bewegbar ist.

16. Werkzeugmaschine nach einem der voranstehenden Ansprüche, **dadurch gekennzeichnet, daß** mittels des Stellelements (150) eine Festlegung des Spannzangenträgers (74) relativ zum Maschinenbett (10) erreichbar ist und daß die Relativbewegung zwischen dem Futtergehäuse (70) und dem Spannzangenträger (74) durch eine von der Maschinensteuerung (38) gesteuerte Drehung der Werkstückspindel (14) um die C-Achse (C) erreichbar ist.

17. Werkzeugmaschine nach einem der Ansprüche 1 bis 15, **dadurch gekennzeichnet, daß** bei feststehender Werkstückspindel (14) mittels des Stellelements (150) eine Bewegung des Spannzangenträgers (74) relativ zum Futtergehäuse (70) **dadurch** erreichbar ist, daß der Spannzangenträger (74) durch eine von der Maschinensteuerung (38) steuerbare und das Stellelement (150) relativ zum Futtergehäuse (70) bewegende Achse (X) bewegbar ist.

18. Werkstückspannfutter für eine um eine Spindelachse drehbare Werkzeugspindel einer Werkzeugmaschine, in dem ein Werkstück (50) mit variabel einstellbarer Exzentrizität bezüglich der Spindelachse (16) spannbar ist, wobei das Werkstückspannfutter (30) ein Futtergehäuse (70), eine Spannzangenbetätigung (32) und einen in dem Futtergehäuse angeordneten Spannzangenträger (74) mit einer in diesem gehaltenen Spannzange (82) aufweist, welch letztere durch Bewegen des Spannzangenträgers relativ zum Futtergehäuse in zur Spindelachse konzentrische oder exzentrische Einstellpositionen bringbar ist, **dadurch gekennzeichnet, daß** zum Einstellen der Einstellpositionen der Spannzange (82) am Spannzangenträger (74) eine Aufnahme (142) vorgesehen ist, welche so ausgebildet ist, daß sie mit einem Stellelement (150) der Werkzeugmaschine in Wirkverbindung bringbar ist, und daß der Spannzangenträger (74) In dem Futtergehäuse (70) zur Veränderung der Einstellposition derart bewegbar gelagert ist, daß durch die Wirkverbindung zwischen Stellelement (150) und Spannzangenträger (74) die Relativbewegung zwischen dem Spannzangenträger (74) und dem Futtergehäuse (70) erreichbar ist.

19. Werkstückspannfutter nach Anspruch 18, **dadurch gekennzeichnet, daß** die Aufnahme (142) so ausgebildet ist, daß die Wirkverbindung zwischen der Aufnahme (142) und dem Stellelement (150) durch Formschluß erfolgt.

20. Werkstückspannfutter nach Anspruch 19, **dadurch gekennzeichnet, daß** die Aufnahme (142) so ausgebildet ist, daß die formschlüssige Verbindung von Stellelement (150) und Aufnahme (142) durch eine Relativbewegung in einer Eingriffsrichtung (156) erreichbar ist, welche quer zur Bewegungsrichtung des Spannzangenträgers (74) relativ zum Futtergehäuse (70) verläuft.

21. Werkstückspannfutter nach Anspruch 20, **dadurch gekennzeichnet, daß** die Eingriffsrichtung (156) ungefähr parallel zur Spindelachse (16) verläuft.

22. Werkstückspannfutter nach einem der Ansprüche 18 bis 21, **dadurch gekennzeichnet, daß** bei der Relativbewegung zwischen dem Spannzangenträger (74) und dem Futtergehäuse (70) die Spannzangenbetätigung (138) in Richtung einer das Werkstück (50) noch in der Spannzange (82) haltenden Haltestellung der Spannzange (82) beaufschlagbar ist.

23. Werkstückspannfutter nach Anspruch 22, **dadurch gekennzeichnet, daß** das Werkstückspannfutter (30) ein von außerhalb desselben betätigbares Betätigungselement (140) aufweist, mit welchem auf die Spannzangenbetätigung (138) im Sinne einer das Werkstück noch in der Spannzange (82) haltenden Haltestellung der Spannzange (82) einwirkbar ist.

24. Werkstückspannfutter nach Anspruch 23, **dadurch gekennzeichnet, daß** das Betätigungselement (14) durch Einwirkung auf das Werkstückspannfutter (30) von außen betätigbar ist.

25. Werkstückspannfutter nach Anspruch 23 oder 24, **dadurch gekennzeichnet, daß** das Betätigungselement (140) durch das Stellelement (150) betätigbar ist.

26. Werkstückspannfutter nach Anspruch 25, **dadurch gekennzeichnet, daß** das Betätigungselement (140) am Spannzangenträger (74) angeordnet und gemeinsam mit diesem beim Verändern der Einstellposition relativ zum Futtergehäuse (70) bewegbar ist.

27. Werkstückspannfutter nach Anspruch 26, **dadurch gekennzeichnet, daß** das Betätigungselement (140) die Aufnahme (142) für das Stellelement (150) trägt.

28. Werkstückspannfutter nach einem der Ansprüche 25 bis 27, **dadurch gekennzeichnet, daß** das Betätigungselement (140) in Eingriffsrichtung (156) des Stellelements (150) bewegbar ist.

29. Werkstückspannfutter nach einem der Ansprüche 25 bis 28, **dadurch gekennzeichnet, daß** das Betätigungselement (140) ungefähr parallel zur Spindelachse (16) bewegbar ist.

30. Werkstückspannfutter nach einem der Ansprüche 18 bis 29, **dadurch gekennzeichnet, daß** der Spannzangenträger (74) im Futtergehäuse (70) um eine zur Spindelachse (16) exzentrische Achse (76) drehbar ist und daß die Spannzange (82) mit ihrer Symmetrieachse (86) exzentrisch zur Achse (76) angeordnet ist.

31. Werkstückspannfutter nach einem der Ansprüche 18 bis 29, **dadurch gekennzeichnet, daß** der Spannzangenträger (74') in dem Futtergehäuse (70') linear verschiebbar ist.

## Claims

1. Machine tool for the turning of workpieces (50) with eccentric sections, comprising a tool support (40) movable in the direction of at least one axis (X, Z), a workpiece spindle (14) drivable for rotation about a spindle axis (16), said workpiece spindle comprising a workpiece chuck (30), the workpiece (50) being clampable in said chuck with a variably adjustable eccentricity in relation to the spindle axis (16), wherein the workpiece chuck (30) has a chuck housing (70), a collet actuation and a collet support (74) arranged in the chuck housing (70) and having a collet (82) held therein, said collet being adapted to be brought into concentric or eccentric adjustable positions relative to the spindle axis (16) as a result of movement of the collet support (74) relative to the chuck housing (70), **characterized in that** the machine tool has at least one axis (X, Z, C) controlled by a machine control (38), that an adjusting element (150) is provided on the machine tool, said element being movable towards the workpiece chuck (30) for the adjustment of the respective adjustable position of the collet (82) and being adapted to be brought into operative connection with a receiving means (142) connected to the collet support (74) and that in this operative connection between the adjusting element (150) and the collet support (74') the relative movement between the collet support (74) and the chuck housing (70) for altering the adjustable position is controllable by means of the machine control (38) by way of the at least one controlled axis (C, X).

2. Machine tool as defined in claim 1, **characterized in that** the adjusting element (150) is movable by the machine control (38) relative to the receiving means (142) in a direction of engagement (156) extending transversely to the direction of movement of the collet support (74) relative to the chuck housing (70).

3. Machine tool as defined in claim 2, **characterized in that** the direction of engagement (156) extends approximately parallel to the spindle axis (16).

4. Machine tool as defined in any one of the preceding claims, **characterized in that** the workpiece chuck (30) has an actuating element (140) actuatable by the machine control (38) for acting on the collect actuation (138) in the direction of a holding position of the collet (82) still holding the workpiece (50) in the collet (82).

5. Machine tool as defined in claim 4, **characterized in that** the actuating element (140) is actuatable due to action on the workpiece chuck (30) from outside.

6. Machine tool as defined in claim 5, **characterized in that** the actuating element (140) is actuatable by the tool support (40).

7. Machine tool as defined in claim 5 or 6, **characterized in that** the actuating element (140) is actuatable by the adjusting element (150).

8. Machine tool as defined in any one of claims 4 to 7, **characterized in that** the actuating element (140) is arranged on the collet support (74) and is movable together with it during the alteration of the adjustable position relative to the chuck housing (70).

9. Machine tool as defined in any one of claims 4 to 8, **characterized in that** the actuating element (140) bears the receiving means (142) for the adjusting element (150).

10. Machine tool as defined in any one of claims 4 to 9, **characterized in that** the actuating element (140) is movable in the direction of engagement (156) of the adjusting element (150).

11. Machine tool as defined in any one of claims 4 to 10, **characterized in that** the actuating element (140) is movable approximately parallel to the spindle axis (16).

12. Machine tool as defined in any one of the preceding claims, **characterized in that** the adjusting element (150) is held on the tool support (40) movable by the machine control (38).

13. Machine tool as defined in claim 12, **characterized in that** the adjusting element (150) is arranged in the tool support (40) instead of a tool (48).

14. Machine tool as defined in claim 12 or 13, **characterized in that** the tool support (40) is movable by the machine control (38) in the direction of engagement (156) of the adjusting element (150).

15. Machine tool as defined in any one of claims 12 to 14, **characterized in that** the tool support (40) is movable by the machine control (38) transversely to the direction of engagement (156) of the adjusting element (150).

16. Machine tool as defined in any one of the preceding claims, **characterized in that** a securing of the collet support (74) in position relative to the machine base (10) is achievable by means of the adjusting element (150) and that the relative movement between the chuck housing (70) and the collet support (74) is achievable by means of a rotation of the workpiece spindle (14) about the C axis (C) controlled by the machine control (38).

17. Machine tool as defined in any one of claims 1 to 15, **characterized in that** with a stationary workpiece spindle (14) a movement of the collet support (74) relative to the chuck housing (70) is achievable by means of the adjusting element (150) **in that** the collet support (74) is movable by means of an axis (X) controllable by the machine control (38) and moving the adjusting element (150) relative to the chuck housing (70).

18. Workpiece chuck for a tool spindle of a machine tool rotatable about a spindle axis, a workpiece (50) being clampable in said chuck with a variably adjustable eccentricity in relation to the spindle axis (16), wherein the workpiece chuck (30) has a chuck housing (70), a collet actuation (32) and a collet support (74) arranged in the chuck housing and having a collet (82) held in it, said collet being adapted to be brought into concentric or eccentric adjustable positions relative to the spindle axis as a result of movement of the collet support relative to the chuck housing, **characterized in that** a receiving means (142) is provided on the collet support (74) for the adjustment of the adjustable positions of the collet (82), said receiving means being designed such that it is adapted to be brought into operative connection with an adjusting element (150) of the machine tool, and that the collet support (74) is mounted in the chuck housing (70) so as to be movable for altering the adjustable position in such a manner that the relative movement between the collet support (74) and the chuck housing (70) is achievable as a result of the operative connection between adjusting element (150) and collet support (74).

19. Workpiece chuck as defined in claim 18, **characterized in that** the receiving means (142) is designed such that the operative connection between the receiving means (142) and the adjusting element (150) is brought about by way of form locking.

20. Workpiece chuck as defined in claim 19, **characterized in that** the receiving means (142) is designed such that the form-locking connection of adjusting element (150) and receiving means (142) is achievable by way of a relative movement in a direction of engagement (156) extending transversely to the direction of movement of the collet support (74) relative to the chuck housing (70).

21. Workpiece chuck as defined in claim 20, **characterized in that** the direction of engagement (156) extends approximately parallel to the spindle axis (16).

22. Workpiece chuck as defined in any one of claims 18 to 21, **characterized in that** the collet actuation (138) is adapted to be acted upon in the direction of a holding position of the collet (82) still holding the workpiece (50) in the collet (82) during the relative movement between the collet support (74) and the chuck housing (70).

23. Workpiece chuck as defined in claim 22, **characterized in that** the workpiece chuck (30) has an actuating element (140) actuatable from outside said chuck for acting on the collet actuation (138) in the direction of a holding position of the collet (82) still holding the workpiece in the collet (82).

24. Workpiece chuck as defined in claim 23, **characterized in that** the actuating element (14) is actuatable as a result of action on the workpiece chuck (30) from outside.

25. Workpiece chuck as defined in claim 23 or 24, **characterized in that** the actuating element (140) is actuatable by means of the adjusting element (150).

26. Workpiece chuck as defined in claim 25, **characterized in that** the actuating element (140) is arranged on the collet support (74) and movable together with it during the alteration of the adjustable position relative to the chuck housing (70).

27. Workpiece chuck as defined in claim 26, **characterized in that** the actuating element (140) bears the receiving means (142) for the adjusting element (150).

28. Workpiece chuck as defined in any one of claims 25 to 27, **characterized in that** the actuating element (140) is movable in the direction of engagement (156) of the adjusting element (150).

29. Workpiece chuck as defined in any one of claims 25 to 28, **characterized in that** the actuating element (140) is movable approximately parallel to the spindle axis (16).

30. Workpiece chuck as defined in any one of claims 18 to 29, **characterized in that** the collet support (74) is rotatable in the chuck housing (70) about an axis (76) eccentric to the spindle axis (16) and that the collet (82) is arranged eccentrically to the axis (76) with its axis of symmetry (86).

31. Workpiece chuck as defined in any one of claims 18 to 29, **characterized in that** the collect support (74') is displaceable linearly in the chuck housing (70').

## Revendications

1. Machine-outil pour le tournage de pièces (50) avec des parties excentriques, comprenant un porte-outil (40) mobile dans la direction d'au moins un axe (x, Z), une broche porte-pièce (14) pouvant être entraînée par rotation autour d'un axe de broche (16), qui comprend un mandrin de serrage de pièce (30), dans lequel la pièce (50) peut être serrée avec une excentricité réglable de façon variable par rapport à l'axe de broche, le mandrin de serrage de pièce (30) présentant un boîtier de mandrin (70), un actionnement de pince de serrage et un porte-pince de serrage (74) disposé dans le boîtier de mandrin (70) avec une pince de serrage (82) maintenue dans celui-ci, laquelle peut être amenée par déplacement du porte-pince de serrage (74) par rapport au boîtier de mandrin (70) dans des positions de réglage concentriques ou excentriques par rapport à l'axe de broche (16), **caractérisée en ce que** la machine-outil présente au moins un axe (X, Z, C) commandé par une commande de machine (38), **en ce que** sur la machine-outil est prévu un élément de réglage (150), qui peut être déplacé en direction du mandrin de serrage de pièce (30) pour le réglage de la position de réglage respective de la pince de serrage (82) et qui peut être amené en liaison active avec un logement (142) relié au porte-pince de serrage (74) et **en ce que**, dans cette liaison active entre l'élément de réglage (150) et le porte-pince de serrage (74), le déplacement relatif entre le porte-pince de serrage (74) et le boîtier de mandrin (70) peut être commandé pour la modification de la position de réglage par le au moins un axe (C, X) commandé au moyen de la commande de machine (38) .

2. Machine-outil selon la revendication 1, **caractérisée en ce que** l'élément de réglage (150) peut être déplacé par la commande de machine (38) par rapport au logement (142) dans un sens d'engagement (156), qui est agencé transversalement au sens de déplacement du porte-pince de serrage (74) par rapport au boîtier de mandrin (70).

3. Machine-outil selon la revendication 2, **caractérisée en ce que** le sens d'engagement (156) est à peu près parallèle à l'axe de broche (16).

4. Machine-outil selon l'une quelconque des revendications précédentes, **caractérisée en ce que** le mandrin de serrage de pièce (30) présente un élément d'actionnement (140) pouvant être actionné par la commande de machine (38), avec lequel on peut agir sur la commande de pince de serrage (138) dans le sens d'une position de retenue, maintenant la pièce (50) encore dans la pince de serrage (82) de la pince de serrage (82).

5. Machine-outil selon la revendication 4, **caractérisée en ce que** l'élément d'actionnement (140) peut être actionné par l'agissement par l'extérieur sur le mandrin de serrage de pièce (30).

6. Machine-outil selon la revendication 5, **caractérisée en ce que** l'élément d'actionnement (140) peut être actionné par le porte-outil (40).

7. Machine-outil selon la revendication 5 ou 6, **caractérisée en ce que** l'élément d'actionnement (140) peut être actionné par l'élément de réglage (150).

8. Machine-outil selon l'une quelconque des revendications 4 à 7, **caractérisée en ce que** l'élément d'actionnement (140) peut être disposé sur le porte-pince de serrage (74) et peut être déplacé en même temps que celui-ci lors de la modification de la position de réglage par rapport au boîtier de mandrin (70).

9. Machine-outil selon l'une quelconque des revendications 4 à 8, **caractérisée en ce que** l'élément d'actionnement (140) porte le logement (142) pour l'élément de réglage (150).

10. Machine-outil selon l'une quelconque des revendications 4 à 9, **caractérisée en ce que** l'élément d'actionnement (140) peut être déplacé dans le sens d'engagement (156) de l'élément de réglage (150).

11. Machine-outil selon l'une quelconque des revendications 4 à 10, **caractérisée en ce que** l'élément d'actionnement (140) peut être déplacé à peu près parallèlement à l'axe de broche (16).

12. Machine-outil selon l'une quelconque des revendications précédentes, **caractérisée en ce que** l'élément de réglage (150) est maintenu sur le porte-outil (40) mobile pouvant être déplacé par la commande de machine (38).

13. Machine-outil selon la revendication 12, **caractérisée en ce que** l'élément de réglage (150) est disposé dans le porte-outil (40) au lieu d'un outil (48).

14. Machine-outil selon la revendication 12 ou 13, **caractérisée en ce que** le porte-outil (40) peut être déplacé par la commande de machine (38) dans le sens d'engagement (156) de l'élément de réglage (150).

15. Machine-outil selon l'une quelconque des revendications 12 à 14, **caractérisée en ce que** le porte-outil (40) peut être déplacé par la commande de machine (38) transversalement au sens d'engagement (156) de l'élément de réglage (150).

16. Machine-outil selon l'une quelconque des revendications précédentes, **caractérisée en ce qu'**une fixation du porte-pince de serrage (74) par rapport au socle de machine (10) peut être obtenue au moyen de l'élément de réglage (150) et **en ce que** le déplacement relatif entre le boîtier de mandrin (70) et le porte-outil de serrage (74) peut être obtenu par une rotation, commandée par la commande de machine (38), de la broche porte-pièce (14) autour de l'axe C (C).

17. Machine-outil selon l'une quelconque des revendications 1 à 15, **caractérisée en ce que**, avec la broche porte-pièce (14) fixe, un déplacement du porte-outil de serrage (74) par rapport au boîtier de mandrin (70) peut être obtenu au moyen de l'élément de réglage (150), **en ce que** le porte-outil de serrage (74) peut être déplacé par un axe (X) contrôlable par la commande de machine (38) et déplaçant l'élément de réglage (150) par rapport au boîtier de mandrin (70).

18. Mandrin de serrage de pièce pour une broche porte-pièce, pouvant tourner autour d'un axe de broche, d'une machine à outil, dans lequel une pièce (50) peut être serrée avec une excentricité réglable de façon variable par rapport à l'axe de broche (16), le mandrin de serrage de pièce (30) présentant un boîtier de mandrin (70), une commande de pince de serrage (32) et un porte-pince de serrage (74) disposé dans le boîtier de mandrin avec une pince de serrage (82) maintenue dans celui-ci, laquelle peut être amenée par un déplacement du porte-pince de serrage par rapport au boîtier de mandrin dans des positions de réglage concentriques ou excentriques par rapport à l'axe de broche, **caractérisé en ce que**, pour le réglage des positions de réglage de la pince de serrage (82), il est prévu sur le porte-pince de serrage (74) un logement (142), qui est conçu de telle sorte qu'il peut être amené avec un élément de réglage (150) de la machine-outil en liaison active et **en ce que** le porte-pince de serrage (74) est logé de façon mobile dans le boîtier de mandrin (70) pour la variation de la position de réglage de telle sorte que le déplacement relatif entre le porte-pince de serrage (74) et le boîtier de mandrin (70) peut être obtenu par la liaison active entre l'élément de réglage (150) et le porte-pince de serrage (74).

19. Mandrin de serrage de pièce selon la revendication 18, **caractérisé en ce que** le logement (142) est conçu de telle sorte que la liaison active entre le logement (142) et l'élément de réglage (150) s'effectue par conjugaison de formes.

20. Mandrin de serrage de pièce selon la revendication 19, **caractérisé en ce que** le logement (142) est conçu de telle sorte que la liaison mécanique de l'élément de réglage (150) et du logement (142) peut être obtenue par un déplacement relatif dans un sens d'engagement (156), qui est agencé transversalement au sens de déplacement du porte-pince de serrage (74) par rapport au boîtier de mandrin (70).

21. Mandrin de serrage de pièce selon la revendication 20, **caractérisé en ce que** le sens d'engagement (156) est à peu près parallèle à l'axe de broche (16).

22. Mandrin de serrage de pièce selon l'une quelconque des revendications 18 à 21, **caractérisé en ce que**, lors du déplacement relatif entre le porte-pince de serrage (74) et le boîtier de mandrin (70), l'actionnement de la pince de serrage (138) peut être sollicité en direction d'une position de retenue, maintenant la pièce (50) encore dans la pince de serrage (82), de la pince de serrage (82).

23. Mandrin de serrage de pièce selon la revendication 22, **caractérisé en ce que** le mandrin de serrage de pièce (30) présente un élément d'actionnement (140) pouvant être actionné à l'extérieur de ce mandrin, élément avec lequel on peut agir sur l'actionnement de pince de serrage (138) dans le sens d'une position de retenue, maintenant la pièce encore dans la pince de serrage (82), de la pince de serrage (82).

24. Mandrin de serrage de pièce selon la revendication 23, **caractérisé en ce que** l'élément d'actionnement (14) peut être commandé par l'extérieur en agissant sur le mandrin de serrage de pièce (30).

25. Mandrin de serrage de pièce selon la revendication 23 ou 24, **caractérisé en ce que** l'élément d'actionnement (140) peut être actionné par l'élément de réglage (150).

26. Mandrin de serrage de pièce selon la revendication 25, **caractérisé en ce que** l'élément d'actionnement (140) est disposé sur le porte-pince de serrage (74) et peut être déplacé conjointement avec cet élément lors de la modification de la position de réglage par rapport au boîtier de mandrin (70).

27. Mandrin de serrage de pièce selon la revendication 26, **caractérisé en ce que** l'élément d'actionnement (140) porte le logement (142) pour l'élément de réglage (150).

28. Mandrin de serrage de pièce selon l'une quelconque des revendications 25 à 27, **caractérisé en ce que** l'élément d'actionnement (140) peut être déplacé dans le sens d'engagement (156) de l'élément de réglage (150).

29. Mandrin de serrage de pièce selon l'une quelconque des revendications 25 à 28, **caractérisé en ce que** l'élément d'actionnement (140) peut être déplacé à peu près parallèlement à l'axe de broche (16).

30. Mandrin de serrage de pièce selon l'une quelconque des revendications 18 à 29, **caractérisé en ce que** le porte-pince de serrage (74) peut tourner dans le boîtier de mandrin (70) autour d'un axe (76) excentrique par rapport à l'axe de broche (16) et **en ce que** la pince de serrage (82) est disposée avec son axe de symétrie de façon excentrique par rapport à l'axe (76).

31. Mandrin de serrage de pièce selon l'une quelconque des revendications 18 à 29, **caractérisé en ce que** le porte-pince de serrage (74') est coulissant linéairement dans le boîtier de mandrin (70').
